(19) Europäisches Patentamt

European Patent Office

Office européen des brevets

(11) Veröffentlichungsnummer: **0 324 909 B1**

# (12) EUROPÄISCHE PATENTSCHRIFT

(45) Veröffentlichungstag der Patentschrift: **08.07.92**

(51) Int. Cl.⁵: **B23B 31/02**, B23Q 1/00

(21) Anmeldenummer: **88118280.2**

(22) Anmeldetag: **03.11.88**

(54) **Werkzeug.**

(30) Priorität: **24.11.87 CH 4568/87**

(43) Veröffentlichungstag der Anmeldung:
**26.07.89 Patentblatt 89/30**

(45) Bekanntmachung des Hinweises auf die
Patenterteilung:
**08.07.92 Patentblatt 92/28**

(84) Benannte Vertragsstaaten:
**AT BE DE ES FR GB IT NL SE**

(56) Entgegenhaltungen:
**CH-A- 574 295**
**US-A- 3 320 833**

(73) Patentinhaber: **Dihart AG**
**Industriestrasse 2**
**CH-4657 Dulliken(CH)**

(72) Erfinder: **Christoffel, John**
**Bleumatthöhe 19**
**CH-5264 Gipf-Oberfrick(CH)**
Erfinder: **Büttiker, Otto**
**Dünnernstrasse 795**
**CH-4614 Hägendorf(CH)**

(74) Vertreter: **Scheidegger, Werner & Co.**
**Siewerdtstrasse 95**
**CH-8050 Zürich(CH)**

EP 0 324 909 B1

## Beschreibung

Die Erfindung betrifft ein Werkzeug mit einem Werkzeugschaft und an diesem mittels einer Konuskupplung lösbar gehaltenen Werkzeugkopf mit einem konischen Ansatz, der mit einem im Werkzeugschaft ausgebildeten Hohlkonus die Konuskupplung bildet, sowie mit einer eine Durchgangsbohrung des Werkzeugkopfes und des konischen Ansatzes frei drehbar durchsetzenden, in Achsrichtung unverschiebbar am Werkzeugkopf und damit am konischen Ansatz abgestützten Schraube, welche in einer koaxial zur Schaftachse im Werkzeugschaft verlaufenden Gewindebohrung lösbar gehalten ist und an ihrem Gewinde abgewandten Ende Mittel zum Ausüben eines Drehmomentes zwecks axialer Druckkraftübertragung aufweist.

Die lösbare Verbindung zwischen dem Werkzeugkopf und dem Werkzeugschaft soll das Auswechseln des den Verschleissteil bildenden Werkzeugkopfes an dem für eine mehrfache Verwendung bestimmten Werkzeugschaft ermöglichen, der zur Herstellung sehr langer Bohrungen entsprechend lang ausgebildet ist. Zum Lösen der Konuskupplung gibt es entweder die sehr einfache bekannte Methode, einen Austreiber in eine radiale Ausnehmung im Werkzeugschaft zwischen diesen und den Werkzeugkopf hineinzuschlagen, oder es gibt aufwendigere Lösungen, bei denen durch die Drehbewegung eines mit Gewinde versehenen Teils im Zusammenwirken mit einem Gegengewindestück eine Axialbewegung zum Lösen der Konuskupplung erzeugt wird. Es werden entweder Ringmuttern verwendet, und es müssen im Werkzeugschaft Langlöcher für Mitnehmer zum Zusammenwirken mit der Ringmutter ausgebildet sein, oder es wird ein Gewindebolzen mit zwei Gewindeabschnitten verwendet, deren Gewinde unterschiedliche Steigung besitzt, so dass sich eine relative Axialbewegung zum Lösen der Konuskupplung ergibt, wenn der Gewindebolzen gedreht wird.

Ein Werkzeug der eingangs definierten Art ist aus CH-A-574 295 bekannt. Bei diesem Werkzeug wird eine Schraube verwendet, welche frei drehbar durch den mit einem konischen Ansatz versehenen Werkzeugkopf führt und sich über ein erstes Gewinde im Inneren des konischen Ansatzes an diesem abstützt. Eine axiale Austreibkraft wird dadurch erzielt, dass ein zweiter verschiedener Gewindeabschnitt der Schraube in den Werkzeugschaft führt.

Der vorliegenden Erfindung lag die Aufgabe zugrunde, an dem Werkzeug der eingangs genannten Art die Mittel zum Lösen der Konuskupplung wesentlich einfacher zu gestalten. Diese Aufgabe wird durch das Werkzeug mit den Merkmalen nach Anspruch 1 gelöst. Vorzugsweise ist die am Werkzeugkopf und am konischen Ansatz abgestützte Schraube mit einer umlaufenden Nut versehen, in welcher ein Seegerring gehalten ist, der gegen die Endfläche des konischen Ansatzes anliegt, während der Schraubenkopf stirnseitig gegen den Werkzeugkopf anliegt, so dass die Schraube beim Hineinschrauben wie auch beim Herausschrauben den Werkzeugkopf mitnimmt.

Ein Ausführungsbeispiel des Erfindungsgegenstandes wird nachfolgend anhand der Zeichnungen näher erläutert. Es zeigen:

Fig. 1 einen Axialschnitt durch den vorderen Teil des Werkzeuges;

Fig. 2 den Bolzen zur Befestigung des Werkzeugkopfes;

Fig. 3 bis 6 weitere Ausführungsformen des Bolzens, dei denen der Anschlag unterschiedlich ausgebildet ist.

Das dargestellte Werkzeug ist eine Reibahle zur Bearbeitung tiefer Bohrungen und besitzt daher einen langen Werkzeugschaft 1, der abgebrochen dargestellt ist und der einstückig mit einem anschliessenden und in der Zeichnung nicht dargestellten Konus zum Einsetzen des Werkzeugschaftes in die Drehspindel einer Werkzeugmaschine ausgebildet ist. Der Werkzeugschaft 1 weist an seinem Ende einen Hohlkonus 2 auf, an den sich eine zylindrische Bohrung 3 anschliesst. Von dieser erstreckt sich eine Gewindebohrung 4 koaxial zur Achse des Werkzeugschaftes 1 in diesen hinein.

Der als Reibahle ausgebildete Werkzeugkopf 5 ist einstückig mit einem Ansatz 6 verbunden, der im unteren längeren Teil konisch ausgebildet ist und zusammen mit dem Hohlkonus 2 die Konuskupplung bildet. Durch den Werkzeugkopf 5 und den Ansatz 6 erstreckt sich eine axiale Durchgangsbohrung 7 hindurch. Durch diese erstreckt sich frei drehbar ein Bolzen 8 hindurch, der vorzugsweise als Schraube ausgebildet ist, die an einem Ende ein Gewinde 9 trägt. Der Schraubenkopf 10 am anderen Ende liegt gegen die Stirnseite des Werkzeugkopfes 5 an, wenn die Schraube mit dem Gewinde am anderen Ende in die Gewindebohrung 4 des Werkzeugschaftes 1 eingeschraubt ist. An der Schraube 8 ist im Abstand oberhalb des Gewindes 9 ein Anschlag 11 befestigt, der gegen die innenseitige Stirnfläche des mit dem Werkzeugkopf 5 einstückig verbundenen Ansatzes 6 anliegt. Dieser Anschlag ist vorzugsweise ein Seegerring 11, der in einer umlaufenden Nut 12 der Schraube 8 gehalten ist. Damit ist der Bolzen bzw. die Schraube 8 sowohl am Werkzeugkopf 5 wie auch am Ansatz 6 unverschiebbar abgestützt, so dass zum Lösen der Konuskupplung axiale Druckkräfte ausgeübt werden, wenn der Bolzen 8 aus der Gewindebohrung 4 des Werkzeugschaftes 1 herausgeschraubt wird. Beim Einschrauben des Bolzens 8 nimmt der Schraubenkopf 10 den Werkzeugkopf 5 und den Ansatz 6 mit, um die Konuskupplung festzuziehen. Die aus dem Werkzeugkopf 5, dem Ansatz 6 und der Schraube 8 bestehende Einheit kann leicht ausgewechselt werden.

Am vorderen Ende des Werkzeugschaftes 1 sind einander gegenüberliegend zwei Schlitze 13 ausgebildet. Im Ansatz 6 sind zwischen dem Werkzeugkopf 5 und dem konischen Teil des Ansatzes zwei sich radial erstreckende Mitnehmerstifte 14 fest angeordnet, die sich in die Schlitze 13 hinein erstrecken und als Mitnahmemittel zur Kraftübertragung vom Werkzeugschaft 1 auf den Werkzeugkopf 5 dienen. Vor dem Festschrauben des Werkzeuges müssen die Mitnehmerstifte 14 mit den Schlitzen 13 in Eingriff gebracht werden. Zum Festschrauben des Werkzeuges und zum Lösen der Konuskupplung ist als Mittel zur Ausübung eines Drehmomentes auf den Bolzen 8 der in dem Schraubenkopf 10 vorhandene Schraubenzieherschlitz 15 zu verwenden.

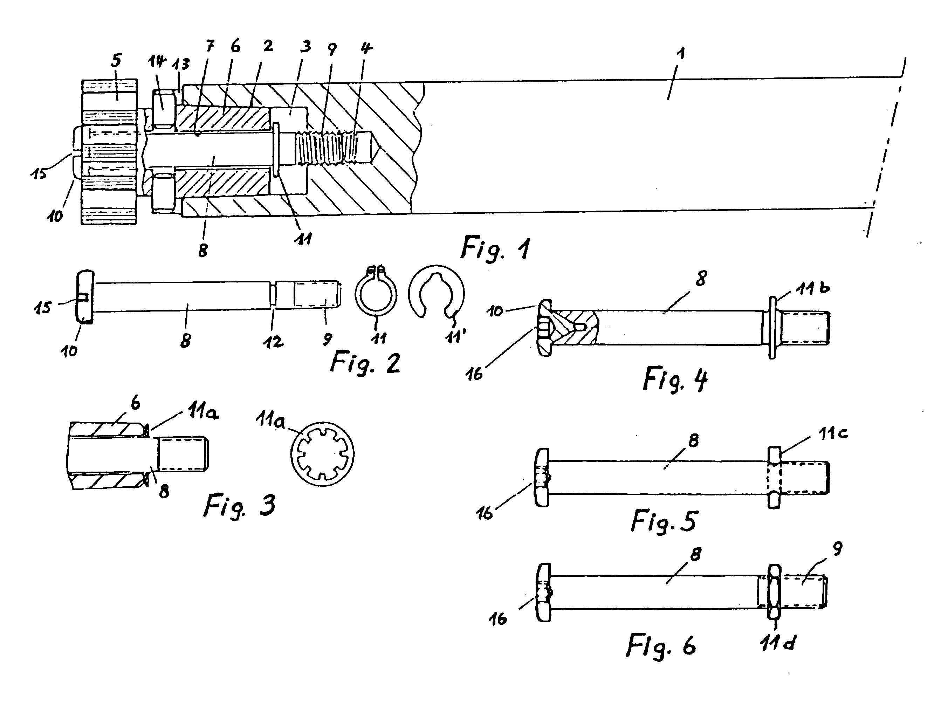

Vorteilhafter ist zum Betätigen der Schraube ein im Schraubenkopf 10 gemäss Fig. 4 und 5 ausgebildeter sternförmiger Innensechskant 16, der mit einem dazu passenden, als sped-Torx Schlüssel bezeichneten Werkzeug ein grösseres Drehmoment auszuüben erlaubt.

Der an der Schraube 8 befestigte Anschlag kann ausser des bereits erwähnten Seegerrings 11 oder einer Seeger-Sicherungsscheibe 11′ auch ein ohne Nut bzw. Einstich an der Schraube zu befestigender Seeger-Zackenring 11a gemäss Fig. 3 oder ein mit dem Schraubenschaft einstückiger radialer Flansch 11b gemäss Fig. 4 sein, in welchem Fall dann allerdings nach der Montage von Werkzeugkopf 5 und Schraube 8 der Schraubenkopf 10 anschliessend stumpf angeschweisst werden muss. Gemäss Fig. 5 kann der Anschlag auch ein den Schraubenschaft quer durchsetzender Stift 11c sein.

Gemäss Fig. 6 ist der Anschlag eine auf einem am Schraubenschaft länger ausgebildeten Gewinde 9 verdrehungssicher gehaltene Mutter 11d.

## Patentansprüche

1. Werkzeug mit einem Werkzeugschaft (1) und an diesem mittels einer Konuskupplung lösbar gehaltenen Werkzeugkopf (5) mit einem konischen Ansatz (6), der mit einem im Werkzeugschaft (1) ausgebildeten Hohlkonus (2) die Konuskupplung bildet, sowie mit einer eine Durchgangsbohrung (7) des Werkzeugkopfes (5) und des konischen Ansatzes (6) frei drehbar durchsetzenden, in Achsrichtung unverschiebbar am Werkzeugkopf (5) und damit am konischen Ansatz (6) abgestützten Schraube (8), welche in einer koaxial zur Schaftachse im Werkzeugschaft (1) verlaufenden Gewindebohrung (4) lösbar gehalten ist und an ihrem Gewinde (9) abgewandten Ende Mittel (10, 15) zum Ausüben eines Drehmomentes zwecks axialer Druckkraftübertragung aufweist, dadurch gekennzeichnet, dass die Schraube (8) einerseits mit ihrem Kopf (10) gegen den Werkzeugkopf (5) anliegt und andererseits einen zur Anlage gegen das inwendige Ende des konischen Ansatzes (6) anzuliegen bestimmten Anschlag (11) zwecks Übertragung von axialen Druckkräften auf den konischen Ansatz (6) und den Werkzeugkopf (5) zum Lösen desselben beim Drehen der Schraube (8) am vom Gewinde (9) abgewandten Ende aufweist.

2. Werkzeug nach Anspruch 1, dadurch gekennzeichnet, dass der Anschlag ein am Schraubenschaft in einer Nut (12) befestigter Seegerring (11) oder eine Seeger-Sicherungsscheibe (11') oder ein ohne Nut am Schraubenschaft befestigter Seeger-Zackenring (11a) ist.

3. Werkzeug nach Anspruch 1, dadurch gekennzeichnet, dass der Anschlag ein mit dem Schraubenschaft einstückiger radialer Flansch (11b) ist.

4. Werkzeug nach Anspruch 1, dadurch gekennzeichnet, dass der Anschlag ein den Schraubenschaft quer durchsetzender Stift (11c) ist.

5. Werkzeug nach Anspruch 1, dadurch gekennzeichnet, dass der Anschlag eine auf dem mit einem entsprechend langen Gewindeabschnitt (9) versehenen Schraubenschaft (8) angeordnete und gegen Verdrehung gesicherte Mutter (11d) ist.

## Claims

1. A tool having a shank (1) and a head (5) releasably held thereon by means of a taper coupling, said tool head (5) comprising a tapering projection (6) which, together with a hollow taper (2) formed in the tool shank (1), forms the taper coupling, and a screwbolt (8) which passes in freely rotatable relationship through a continuous bore (7) in the tool head (5) and in the taper projection (6), said screwbolt being supported against the tool head (5) and hence against the taper projection (6) so as to be axially non-displaceable, and being releasably held in a tapped bore (4) extending in the tool shank (1) coaxially to the shank axis and having, at its end remote from the screwthread (9), means (10, 15) for exerting a torque for the purpose of axial thrust transmission, characterised in that at one end the screwbolt (8) bears by its head (10) against the tool head (5) while at its other end it has an abutment (11) intended to bear against the inner end of the taper projection (6) for the purpose of transmission of axial thrust to the taper projection (6) and the tool head (5) in order to release the same on rotation of the screwbolt (8) at the end remote from the screwthread (9).

**2.** A tool according to claim 1, characterised in that the abutment is a Seeger ring (11) fixed to the screwbolt shank in a groove (12), or a Seeger locking washer (11') or a Seeger serrated ring (11a) secured to the screwbolt shank without a groove.

**3.** A tool according to claim 1, characterised in that the abutment is a radial flange (11b) integral with the screwbolt shank.

**4.** A tool according to claim 1, characterised in that the abutment is a pin (11c) extending transversely through the screwbolt shank.

**5.** A tool according to claim 1, characterised in that the abutment is a nut (11d) disposed on the screwbolt shank (8) having an appropriately long screwthreaded portion (9), said nut being secured against rotation.

**Revendications**

**1.** Outil pourvu d'une tige d'outil (1) et d'une tête d'outil (5) maintenue de façon amovible sur celle-ci au moyen d'un embrayage à cône et munie d'un embout cônique (6) qui forme avec un cône creux (2) réalisé dans la tige d'outil (1) l'embrayage à cône, ainsi que d'une vis (8) traversant de façon librement rotative un alésage traversant (7) de la tête d'outil (5) et du talon cônique (6) et supportée sur la tête d'outil (5) de façon non coulissante dans le sens axial et donc sur le talon cônique (6), vis qui est maintenue amovible dans un taraudage (4) s'étendant dans la tige d'outil (1) coaxialement à l'axe de tige et qui possède à son extrémité opposée au filet (9) des moyens (10; 15) pour exercer un couple de rotation dans le but d'une transmission d'une force de pression axiale, caractérisée en ce que la vis (8), d'une part, vient en appui par sa tête (10) contre la tête d'outil et, d'autre part, présente une butée (11) destinée à venir en appui contre l'extrémité côté interne du talon cônique (6) dans le but de la transmission de forces de pression axiales sur le talon cônique (6) et la tête d'outil (5) pour le dévissage de celle-ci lors de la rotation de la vis (8) à l'extrémité opposée au filet (9).

**2.** Outil selon la revendication 1, caractérisé en ce que la butée est réalisée sous la forme d'un anneau de retenue du type Seeger (11) fixé à la tige de vis dans une rainure (12) ou par un disque de sécurité du type Seeger (11') ou par un disque denté du type Seeger (11a) fixé, sans rainures, sur la tige de vis.

**3.** Outil selon la revendication 1, caractérisé en ce que la butée est constituée par une bride radiale (11b) réalisée en une pièce avec la tige de vis.

**4.** Outil selon la revendication 1, caractérisé en ce que la butée est constituée par une goupille (11c) traversant transversalement la tige de vis.

**5.** Outil selon la revendication 1, caractérisé en ce que la butée est constituée par un écrou (11d) bloqué en rotation et disposé sur la tige de vis (8) pourvue d'une portion filetée (9) d'une longueur correspondante.

Fig. 1

Fig. 2

Fig. 3

Fig. 4

Fig. 5

Fig. 6

EP 0 324 909 B1